(19) **Europäisches Patentamt / European Patent Office / Office européen des brevets**

(11) **EP 4 404 293 A1**

(12) **EUROPEAN PATENT APPLICATION**
published in accordance with Art. 153(4) EPC

(43) Date of publication:
**24.07.2024 Bulletin 2024/30**

(51) International Patent Classification (IPC):
**H01M 4/133** (2010.01)    **H01M 4/587** (2010.01)

(21) Application number: **22961590.1**

(22) Date of filing: **24.11.2022**

(86) International application number:
**PCT/CN2022/134149**

(87) International publication number:
**WO 2024/108504 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde City, Fujian 352100 (CN)**

(72) Inventors:
• **LIN, Xieji**
 **Fujian 352100 (CN)**
• **SHEN, Rui**
 **Fujian 352100 (CN)**
• **HE, Libing**
 **Fujian 352100 (CN)**

(74) Representative: **Gong, Jinping**
**CocreateIP**
**Neumarkterstr. 21**
**81673 München (DE)**

(54) **ARTIFICIAL GRAPHITE, PREPARATION METHOD THEREFOR AND APPLICATION THEREOF**

(57) The present application discloses an artificial graphite, a preparation method therefor and the use thereof. A method for preparing an artificial graphite of an embodiment of the present application comprises the following step: subjecting a graphite raw material to a heat treatment to obtain the artificial graphite, wherein an environmental atmosphere for the heat treatment is at least one gas of air and carbon dioxide or a mixed gas of at least one gas of air and carbon dioxide and a chemically inert gas; and during the heat treatment, the graphite raw material is in a static state. The method for preparing an artificial graphite of an embodiment of the present application realizes at least modifying a surface of the graphite raw material by controlling the heat treatment conditions for the graphite raw material, such that the prepared artificial graphite has an appropriately low compaction rebound capacity, a high and stable compacted density, and a good cycling performance. The artificial graphite of the present application can be used as a negative electrode active material and used in negative electrodes and batteries.

```
┌─────────────────────────────────────────┐
│ Crushing a solid carbon source to obtain │
│ a granular solid carbon source           │      S01
└─────────────────────────────────────────┘
                    │
                    ▼
┌─────────────────────────────────────────┐
│ Shaping the granular solid carbon source │
│ to obtain a shaped particle              │      S02
└─────────────────────────────────────────┘
                    │
                    ▼
┌─────────────────────────────────────────┐
│ Graphitizing the shaped particle to      │
│ obtain an artificial graphite raw material│     S03
└─────────────────────────────────────────┘
```

*FIG. 1*

## Description

## Technical Field

The present application relates to the technical field of batteries, in particular to an artificial graphite, a preparation method therefor and the use thereof.

## Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

Besides, with the increasing popularization of battery applications, the requirements on the relevant properties of batteries, such as an energy density, are increasingly higher. Moreover, with the gradual increase in the market share of electric new energy vehicles, the requirements on endurance are increasingly higher at present.

The electrode material is one of important factors affecting the relevant properties of the batteries. For example, in batteries using carbon as a negative electrode material, the carbon negative electrode material has a significant influence on the relevant properties of the batteries, particularly the energy density, etc. Graphite has been rapidly and widely concerned due to the characteristics thereof such as abundant resources, a low price, a high reversible capacity, a low charging/discharging voltage platform, no voltage delay, an excellent conductivity. There are quite a lot of researches on and applications of graphite materials. However, the publicly reported graphite has the defect of a too large or too small compaction rebound capacity. The too large compaction rebound capacity causes the low compacted density of the graphite, and further causes the low energy density of electrodes and batteries, thereby affecting the improvement of the energy density of the batteries. The too small compaction rebound capacity can increase the compacted density, but causes the graphite to have a low cycling performance, thereby limiting the application of the batteries.

## Summary of the Invention

In view of the above problems, an embodiment of the present application provides an artificial graphite, a preparation method therefor and the use thereof, so as to solve the technical problem that the existing graphite cannot balance the compacted density and the cycling performance.

In a first aspect, an embodiment of the present application provides a method for preparing an artificial graphite. A method for preparing an artificial graphite of the embodiment of the present application comprises the following step:

subjecting a graphite raw material to a heat treatment to obtain the artificial graphite,
wherein an environmental atmosphere for the heat treatment is at least one gas of air and carbon dioxide or a mixed gas of at least one gas of air and carbon dioxide and a chemically inert gas; and during the heat treatment, the graphite raw material is in a static state.

The method for preparing an artificial graphite of the embodiment of the present application realizes at least modifying a surface of the graphite raw material by controlling the heat treatment conditions for the graphite raw material, such that the prepared artificial graphite has an appropriately low compaction rebound capacity, a high and stable compacted density, and a good cycling performance.

In some embodiments, the temperature for the heat treatment is 500-900°C;
or in some embodiments, the temperature for the heat treatment is 500-900°C and the time for the heat treatment is 30-180 min.

By further controlling and adjusting the temperature or the time of the heat treatment to improve at least the modification effect on the surface of the graphite raw material, the artificial graphite has both an appropriately low compaction rebound capacity and a good cycling performance.

In some embodiments, in the mixed gas, the at least one gas of air and carbon dioxide accounts for 5%-40% of the total volume of the mixed gas.

By controlling and adjusting the gas components of the heat treatment atmosphere, the gas components can be increased to control and adjust the modification effect of the heat treatment on the graphite raw material.

In some embodiments, the particle size Dv50 of the graphite raw material is 6-15 $\mu$m.

In some embodiments, the graphite raw material is an artificial graphite raw material.

The heat treatment effect can be improved by further selecting the particle size and the type of the graphite raw material, thereby further appropriately reducing the compaction rebound capacity of the artificial graphite and improving the cycling performance of the artificial graphite.

In a further embodiment, a method for preparing the artificial graphite raw material comprises the following steps:

crushing a solid carbon source to obtain a granular solid carbon source;
shaping the granular solid carbon source to obtain a shaped particle; and
graphitizing the shaped particle to obtain the artificial graphite raw material.

The artificial graphite raw material prepared by the method is used as the graphite raw material mentioned above, the surface, morphology, particle size, etc. of the graphite raw material can be effectively controlled and adjusted, and thus the heat treatment effect of the graphite raw material is improved, the compaction rebound capacity of the artificial graphite is further properly reduced, and the cycling performance of the artificial graphite is improved.

In a further embodiment, the particle size Dv50 of the granular solid carbon source is not higher than 15 $\mu$m. The particle size of the artificial graphite raw material generated by the graphitization is controlled by controlling the particle size of the granular solid carbon source.

In a further embodiment, the solid carbon source comprises at least one of a petroleum coke, a needle coke, a pitch coke, and a metallurgical coke. These solid carbon sources can be effectively graphitized. The surface, particle size, and morphology of the solid carbon source can also be flexibly controlled according to requirements.

In a further embodiment, the method further comprises a step of granulating the shaped particle before the graphitizing the shaped particle. The surface, particle size, and morphology of the shaped particle can be further controlled and adjusted by granulating the shaped particle, thereby controlling and adjusting the surface, particle size, and morphology of the artificial graphite raw material, so as to improve the modification effect of the heat treatment on the artificial graphite raw material.

In a further embodiment, the granulating method comprises the following step: mixing a carbon source binder and the shaped particle, followed by granulating and shaping.

By using the method for granulating, after a carbon source particle obtained by granulating and shaping is graphitized, the modification effect of the heat treatment on the artificial graphite raw material can be improved.

In a further embodiment, the graphitization is carried out at a temperature of 2,800-3,200°C. The graphitization can improve the degree of graphitization and improve the modification effect of the heat treatment on the artificial graphite raw material.

In a second aspect, an embodiment of the present application provides an artificial graphite. An embodiment of the present application is an artificial graphite prepared by the method for preparing an artificial graphite of the embodiment of the present application mentioned above.

Since the artificial graphite of the present application is an artificial graphite prepared by the method for preparing an artificial graphite of the embodiment of the present application mentioned above, the artificial graphite material of the embodiment of the present application has an appropriately low compaction rebound capacity, a high compacted density stability and a high compacted density, and also has a high cycling performance.

In some embodiments, the compacted density and the rebound rate of the artificial graphite satisfy the following relationship:

$$0.08 \text{ cm}^3/\text{g} \leq \eta/P_{5k} \leq 0.15 \text{ cm}^3/\text{g, and } \eta = (L_{\text{pressure releasing}} - L_{\text{pressure maintaining}})/L_{\text{pressure maintaining}},$$

wherein the $P_{5k}$ is the compacted density of a powder of the artificial graphite under a pressure of 5,000 kg, in g/cm³; the $L_{\text{pressure maintaining}}$ is the thickness of the powder of the artificial graphite when being maintained at the pressure of 5,000 kg; and the $L_{\text{pressure releasing}}$ is the thickness of the powder of the artificial graphite when the pressure is released after the pressure of 5,000 kg is applied.

When the compacted density $P_{5k}$ and the powder compaction rebound rate of the artificial graphite of the embodiment of the present application satisfy the relationship in the equation, an artificial graphite particle in an embodiment of the present application has a relatively low rebound capacity, a higher and stable compacted density, and a better cycling performance.

In some embodiments, the $\eta/P5k$ is 0.10 cm³/g $\leq \eta/P5k \leq$ 0.13 cm³/g. When the $\eta/P_{5k}$ ratio is in the range, the powder of the artificial graphite of the embodiment of the present application has a relatively low compaction rebound capacity, a higher compacted density, and an improved cycling performance.

In some embodiments, the $P_{5k}$ is 1.83-2.08 g/cm³.

In a further embodiment, the $P_{5k}$ is 1.85-2.05 g/cm³.

The artificial graphite of the embodiment of the present application has a high compacted density.

In some embodiments, the $\eta$ is 15.0%-32%. The powder of the artificial graphite of the embodiment of the present application has a low compaction rebound rate.

In some embodiments, the artificial graphite further has at least one of the following properties:

the particle size Dv50 of the artificial graphite is 6-15 $\mu$m;
the BET specific surface area of the artificial graphite is 1.7- 2.5 m$^2$/g;
the OI value of the artificial graphite is 5-15;
the resistivity of the powder of the artificial graphite under a pressure of 8 Mpa is 0.008 S2.cm-0.055 S2. cm;
the tap density of the artificial graphite is 0.80-1.19 g/cm$^3$;
the degree of graphitization G of the artificial graphite is 91%-95%;
the capacity per gram of the artificial graphite is 343-365 mAh/g.

In a further embodiment, the artificial graphite further has at least one of the following properties:

the specific surface area of the artificial graphite is 1.7- 2.2 m$^2$/g;
the OI value of the artificial graphite is 5-10;
the resistivity of the powder of the artificial graphite under the pressure of 8 Mpa is 0.01 $\Omega$.cm-0.042 $\Omega$.cm;
the tap density of the artificial graphite is 0.85-1.16 g/cm$^3$;
the capacity per gram of the artificial graphite is 345-360 mAh/g.

The artificial graphite of the embodiment of the present application also has the characteristic of a high specific surface area, conductivity, and tap density, and other particle morphology characteristics, and further has a high capacity per gram and other properties on the basis of having the above mentioned $P_{5k}$ compacted density, being in the $\eta$ parameter range, and having an appropriately low compaction rebound capacity, a high compacted density stability, and a good cycling performance.

In a third aspect, an embodiment of the present application provides a negative electrode material. The negative electrode material of the embodiment of the present application comprises an artificial graphite, wherein the artificial graphite is an artificial graphite of the embodiment of the present application mentioned above.

The negative electrode material of the embodiment of the present application has a high bonding strength among particles, a relatively low compaction rebound capacity, a stable and high compacted density, and further a high cycling performance.

In a fourth aspect, an embodiment of the present application provides a negative electrode. A negative electrode material contained in the negative electrode of the embodiment of the present application comprises the artificial graphite of the embodiment of the present application or the negative electrode material of the embodiment of the present application.

Since the negative electrode material contained in the negative electrode of the embodiment of the present application contains the artificial graphite of the embodiment of the present application mentioned above, a negative electrode active layer contained therein has a high compacted density, a high energy density, a high rate characteristic, and a good cycling performance.

In a fifth aspect, an embodiment of the present application provides a battery. The battery of the embodiment of the present application comprises the negative electrode of the embodiment of the present application. Since the embodiment of the present application contains the negative electrode of the embodiment of the present application, the battery has a high energy density and a high rate characteristic, and a good cycling stability.

In a sixth aspect, an embodiment of the present application provides a power consuming device. The power consuming device of the embodiment of the present application comprises the battery of the embodiment of the present application, wherein the battery is configured to supply electric energy. The power consuming device of the embodiment of the present application has a long standby or endurance time.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

Brief Description of the Drawings

Various other advantages and benefits will become obvious to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the accompanying drawings:

Fig. 1 is a schematic flow chart of a method for preparing an artificial graphite of an embodiment of the present application;

Fig. 2 is a structural schematic diagram of an implementation of a secondary battery of an embodiment of the present application;

Fig. 3 is an exploded schematic diagram of the secondary battery shown in Fig. 2;

Fig. 4 is a structural schematic diagram of an implementation of a battery module of an embodiment of the present application;

Fig. 5 is a structural schematic diagram of an implementation of a battery pack of an embodiment of the present application;

Fig. 6 is an exploded structural schematic diagram of the battery pack shown in Fig. 5; and

Fig. 7 is a schematic diagram of an implementation of a power consuming device comprising the secondary battery of an embodiment of the present application as a power supply.

Reference Signs in Detailed Description of Embodiments:

10. secondary battery cell, 11. housing, 12. electrode assembly, and 13 cover plate;
20. battery module; and
30. battery pack, 31. box body, and 32. lower box body.

Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of' means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "j" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

Explanations of the relevant definitions involved in an embodiment of the present application are as follows: Degree of graphitization (G): the degree of carbon atoms forming a close-packed hexagonal graphite crystal structure. When the lattice size is closer to the lattice parameter of ideal graphite, the degree of graphitization is higher. The degree of graphitization is generally calculated by measuring the lattice constant of graphite using an X-ray diffraction (XRD) method. The calculation formula is as follows:

$$G = (3.440 - d_{002})/(3.440 - 3.354),$$

wherein, $d_{002}$ is the interplanar spacing of a graphite (002) plane obtained by X-ray diffraction, 3.440 is the interplanar spacing of a completely non-graphitized carbon (002) plane, and 3.354 is the interplanar spacing of an ideal graphitized carbon (002) plane.

Compacted density: a ratio of the surface density of an active layer formed by artificial graphite to the thickness of an electrode plate after rolling, for example, the compacted density = surface density/(thickness of electrode plate after rolling - thickness of current collector), unit: $g/cm^3$

Tap density: the mass per unit volume measured after artificial graphite powder in a container has been tapped under specified conditions, in $g/cm^3$.

Particle size Dv50: the particle size corresponding to 50% of the volume distribution of artificial graphite.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding. Particularly, in the fields of new energy vehicles, unmanned aerial vehicles, etc., the requirements on the endurance ability are higher and higher, and then the requirements on the energy density of the batteries are higher and higher inevitably.

Since lithium-ion batteries prepared by using a carbon material as a negative electrode material show certain safety and stability properties, the researches on the carbon material draw attention of researchers in various countries. The carbon material mainly comprises a graphite carbon material, a non-graphite carbon material, a doped carbon material, and a coated carbon material. Among numerous carbon negative electrode materials, graphite has been rapidly and widely concerned due to the characteristics thereof such as abundant resources, a low price, a high reversible capacity, a low charging/discharging voltage platform, no voltage delay, and an excellent conductivity. An artificial graphite is used as a negative electrode material, and has the advantages of a good cycling performance and rate capability, a good selectivity for an electrolyte solution, etc.

However, the inventors have found through analysis that the existing artificial graphite mainly focuses on how to overcome the defects caused by the two-dimensional structure of the graphite material itself to try to improve the properties of the graphite such as the cycling performance and the rate capability. But the modification effect on the compaction rebound performance and the compacted density of the graphite material is not obvious or on the contrary, the energy density is reduced, and even the cycling performance is reduced, such that the balance between the compaction rebound performance and the cycling performance of the graphite material is difficult.

For example, in the disclosure of an artificial graphite-modified negative electrode material, a preparation method therefor mainly comprises: etching a surface of an artificial graphite by using a strong acid or a strong base to obtain a graphite material A with a porous structure on the surface; mechanically mixing the artificial graphite material A, an amorphous carbon precursor, and a conductive agent to obtain a graphite-coated precursor B; and carbonizing and crushing the graphite-coated precursor B to obtain a surface coating-modified graphite negative electrode material for a high-power lithium-ion battery.

In the researches on the negative electrode material, the inventors find that when strong acid or strong base etching is used for a surface oxidation treatment and an amorphous carbon coating treatment, although a large-rate charging/discharging performance of the artificial graphite is improved, the surface oxidation treatment directly causes the reduction of the compacted density and the cycling performance, the compacted density of an amorphous carbon coating layer is also lower, thereby causing the reduction of the compacted density and the instability of a positive electrode plate, and further losing the energy density. Meanwhile, the crushing treatment thereof further increases the surface defects and deteriorates the compacted density and the cycling performance of the negative electrode material.

In order to meet the requirements of the market on endurance and improve the energy density of the batteries, the inventors find in the researches that the modification treatment, such as a surface modification treatment, on the graphite material can effectively improve the compacted density and the cycling performance of the graphite material. The inventors further study to find that the rebound capacity of the artificial graphite has a significant influence on the compacted density of the electrode plate, for example, it is difficult to accurately reflect the rebound capacity of the artificial graphite from the powder compacted density or rebound rate alone. The inventors find through researches that by means of controlling the heat treatment conditions for the graphite raw material, at least the surface structure, or functional groups contained therein, etc. of the graphite raw material can be modified, such that the compaction rebound capacity of the modified graphite is reduced, and the cycling performance of the modified graphite is improved. The inventors have concluded through further intensive researches that when the modification treatment conditions are further controlled, the compacted density and rebound rate of the graphite powder can be controlled under a certain balance, the rebound capacity of the powder of the artificial graphite can be effectively reduced, the compacted density is improved, the compacted density is stable, and the cycling performance of the powder of the artificial graphite is further improved. Therefore, the solutions of an artificial graphite and a preparation method therefor of the embodiments of the present application are provided, so as to reduce the compaction rebound capacity of the artificial graphite, thereby improving the compacted density, the stability of the compacted density, and the cycling performance thereof.

**Method for preparing artificial graphite**

In a first aspect, an embodiment of the present application provides a method for preparing an artificial graphite. A method for preparing an artificial graphite of the embodiment of the present application comprises the following step:

subjecting a graphite raw material to a heat treatment to obtain the artificial graphite,
wherein an environmental atmosphere for the heat treatment is at least one gas of air and carbon dioxide or a mixed gas of at least one gas of air and carbon dioxide and a chemically inert gas; and
during the heat treatment, the graphite raw material is in a static state.

The method for preparing an artificial graphite of the embodiment of the present application controls the heat treatment atmosphere thereof to contain at least one of air and carbon dioxide. The gases have certain components having oxidation or other modification effects, such as air contain a specific proportion of oxygen, such that the gases can react with the graphite raw material in the heat treatment atmosphere, thus at least the surface of the graphite raw material is modified. In addition, the static state of the graphite raw material means that the graphite raw material itself is static during the heat treatment, that is, static relative to a substrate bearing the graphite raw material.

Therefore, the method for preparing an artificial graphite of the embodiment of the present application can modify the graphite raw material including the surface, morphology, etc. of the graphite raw material by subjecting the graphite raw material to a heat treatment in the atmosphere and in the state, such that the artificial graphite has a relatively low compaction rebound capacity, a high compacted density stability and compacted density, and a good cycling performance.

In an embodiment, the heat treatment may be carried out at a temperature of 500-900°C, further 500-700°C. In an embodiment, the heat treatment may be carried out at 500°C, 550°C, 600°C, 650°C, 700°C, 750°C, 800°C, 850°C, 900°C, or other typical but non-limiting temperatures. In an embodiment, the heat treatment is carried out at a temperature of 500-900°C, further 500-700°C, for 30-180 min. The modification degree of the heat treatment on the graphite raw material is controlled by controlling and adjusting the temperature or the time of the heat treatment, for example, the modification effect on the surface of the graphite raw material can be at least improved, such that the properties, such as the compacted density, the rebound rate etc., of the artificial graphite are improved, the range of the $\eta/P_{5k}$ ratio mentioned below is further adjusted, thus the compaction rebound capacity of the artificial graphite is reduced, and the compacted density, the compacted density stability, the cycling performance of the artificial graphite are improved, thereby improving the electrochemical performance of the artificial graphite.

In some embodiments, in the mixed gas constructing the heat treatment atmosphere for the graphite raw material, when the heat treatment atmosphere is a mixed gas of at least one of air and carbon dioxide and a chemically inert gas, a ratio of the at least one of air and carbon dioxide to the chemically inert gas may be any ratio. Therefore, the air and carbon dioxide in the heat treatment atmosphere account for 0%-100% of the total volume of the mixed gas. The modification effect and degree of the heat treatment can be adjusted by controlling the type and concentration of the heat treatment atmosphere gases, such that the modification effect of the heat treatment is improved, the compaction rebound capacity, the cycling performance, and the compacted density of the artificial graphite itself are further improved, and the compacted density of an active layer formed by taking the artificial graphite as an active material is further improved. In addition, when the heat treatment atmosphere contains a chemically inert gas, the chemically inert gas may be nitrogen or an inert gas. In addition, the gas of the heat treatment atmosphere may be directly introduced into the heat treatment environment at one time. Of course, the gas may also be continuously introduced into the heat treatment environment at a certain rate to maintain the stability of the atmosphere in the environment.

In some embodiments, the particle size $D_v50$ of the graphite raw material is 6-15 μm. In other embodiments, the graphite raw material may be an artificial graphite raw material. The modification effect of the heat treatment can be improved by selecting the particle size and the type of the graphite raw material to be subjected to the heat treatment, thereby further improving the compaction rebound capacity and the compacted density stability of the artificial graphite. Of course, the modification treatment may also be realized by conducting the heat treatment by directly using natural graphite as a raw material.

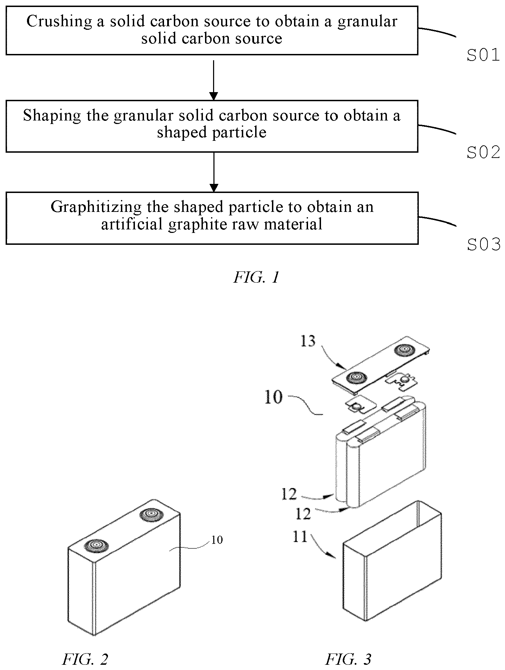

When the graphite raw material to be subjected to the heat treatment is an artificial graphite raw material, in an embodiment, a method for preparing the artificial graphite raw material is as shown in Fig. 1, and comprises the following steps:

S01: crushing a solid carbon source to obtain a granular solid carbon source;
S02: shaping the granular solid carbon source to obtain a shaped particle; and
S03: graphitizing the shaped particle to obtain the artificial graphite raw material.

When the artificial graphite raw material prepared by the method is used as the graphite raw material to be subjected to the heat treatment mentioned above, the surface, morphology, particle size, etc. of the graphite raw material can be effectively controlled and adjusted, such that the modification effect of the heat treatment on the graphite raw material is improved, the compaction rebound capacity of the artificial graphite is reduced, and the compacted density and the cycling performance of the artificial graphite can be improved.

Step S01:

The solid carbon source in step S01 should refer to a carbon source that can be used for preparing the graphite raw material, such as in an embodiment, the solid carbon source may include at least one of a petroleum coke, a needle coke, a pitch coke, and a metallurgical coke. These solid carbon sources can be effectively graphitized, and the surface, particle size, morphology, etc. of the solid carbon sources can further be flexibly controlled as required, such that a graphitization effect is improved, so as to improve the properties of the graphite raw material, such as the surface, particle size, morphology, etc., thus the modification effect of the heat treatment of the graphite raw material is improved, the compaction rebound capacity of the artificial graphite is finally reduced, the compacted density stability and the compacted density are improved, and the cycling performance is improved.

The solid carbon source may be crushed according to the required particle size to obtain the corresponding particle size, for example, in an embodiment, the particle size Dv50 of the granular solid carbon source obtained by the crushing is not higher than 15 μm, such as, may be 5-15 μm. The particle size of the artificial graphite raw material generated by the graphitization treatment is controlled by controlling the particle size of the granular solid carbon source, such that the particle size of the artificial graphite obtained by the heat treatment is controlled to be in the range of 6.0-15.0 μm mentioned above.

In an embodiment, the crushing treatment may be, but is not limited to, crushing by using a crusher.

Step S02:

In step S02, the granular solid carbon source in step S01 is shaped, and the surface, particle size, etc. of the granular solid carbon source particle can be further adjusted, so as to further adjust the surface, particle size, morphology, etc. of the artificial graphite raw material, such that the modification effect of the heat treatment on the artificial graphite raw material is improved, and the compacted density, the compacted density stability, the cycling performance, and other electrochemical properties of the artificial graphite of the embodiment of the present application are improved.

In an embodiment, the shaping treatment may comprise allowing the solid carbon source particle to move and rub against each other, so as to shape the particle, for example, the granular solid carbon source may be treated by using a shaping machine.

In some embodiments, the method further comprises a step of granulating the shaped particle after the shaping, i.e., before graphitizing the shaped particle. The surface, particle size, and morphology of the shaped particle can be further controlled and adjusted by granulating the shaped particle, thereby controlling and adjusting the surface, particle size, and morphology of the artificial graphite raw material, improving the modification effect of the heat treatment on the artificial graphite raw material, and finally improving the compacted density, the compacted density stability, the cycling performance, and other electrochemical properties of the artificial graphite of the embodiment of the present application obtained by the heat treatment.

In an embodiment, the method for granulation may include the following steps: mixing a carbon source binder and the shaped particle, followed by granulating and shaping.

After the carbon source binder and the shaped particle are mixed, the binder can effectively conduct coating and other binding treatments on the shaped particle. After the granulation and shaping, the surface, the morphology, etc. of the shaped particle can be adjusted or particles with a too small particle size can be bound to form secondary particles, such that after the graphitization is carried out on the carbon source particle obtained by the granulating and shaping treatment, the surface, particle size, and morphology of the artificial graphite raw material are further improved, thus the modification effect of the heat treatment on the artificial graphite raw material is further improved, and the compacted density, the compacted density stability, the cycling performance, and other electrochemical properties of the artificial graphite of the embodiment of the present application obtained by the heat treatment are finally improved.

In an embodiment, the carbon source binder can be mixed with the shaped particle according to a ratio that the mass of the carbon source binder is 5-15% of the shaped particle.

In an embodiment, the carbon source binder may include at least one of pitch and a high molecular polymer (e.g., epoxy resin, etc.). When the carbon source binder is pitch, molten pitch and the shaped particle are mixed so as to fully disperse the molten pitch and the shaped particle.

The carbon source particle obtained by the granulating and shaping treatment should ensure that the particle size $D_v50$ of the artificial graphite raw material obtained by the graphitization treatment is 6-15 $\mu$m.

Step S03:

In step S03, the shaped particle or the carbon source particle obtained by the granulating treatment is subjected to graphitization, such that the shaped particle or the carbon source particle is graphitized to produce the artificial graphite raw material. Besides, the shaped particle or the carbon source particle is used as a precursor of the artificial graphite raw material. Therefore, the surface, particle size, and morphology of the artificial graphite raw material generated by the graphitization are further improved, thus the modification effect of the heat treatment on the artificial graphite raw material is further improved, and the compacted density, the compacted density stability, the cycling performance, and other electrochemical properties of the artificial graphite obtained by the heat treatment are finally improved.

In an embodiment, the graphitization treatment may be carried out at a temperature of 2,800-3,200°C. the surface, particle size, morphology, etc. of the artificial graphite raw material can be further improved by controlling and adjusting the graphitization temperature or further the time, so as to further improve the modification effect of the heat treatment on the artificial graphite raw material. For example, the degree of graphitization (G) of the resulting artificial graphite raw material by means of the graphitization treatment may be 91%-95%, further 91%-94%.

**Artificial graphite material**

In a second aspect, an embodiment of the present application provides an artificial graphite. The artificial graphite of the embodiment of the present application is an artificial graphite prepared by the method for preparing an artificial graphite of the embodiment of the present application mentioned above.

Since the artificial graphite of the present application is an artificial graphite prepared by the method for preparing an artificial graphite of the embodiment of the present application mentioned above, compared with the conventional artificial graphite, characteristics of the artificial graphite material of the embodiment of the present application, such as the surface performance, are at least modified. It can be known from testing that the artificial graphite of the embodiment of the present application at least has a relatively low compaction rebound capacity, a high compacted density stability, a high compacted density, and a improved cycling performance.

In an embodiment, the inventors have concluded from the tests of the artificial graphite of the embodiment of the present application that the compacted density and the rebound rate of the artificial graphite of the embodiment of the present application satisfy the following relationship:

$$0.08 \text{ cm}^3/\text{g} \leq \eta/P_{5k} \leq 0.15 \text{ cm}^3/\text{g}, \text{ and } \eta = (L_{\text{pressure releasing}} - L_{\text{pressure maintaining}})/L_{\text{pressure maintaining}},$$

wherein the $P_{5k}$ is the compacted density of the powder of the artificial graphite of the embodiment of the present application after pressure maintaining under the pressure of 5,000 kg for 30 s and pressure releasing for 10 s, and in an embodiment, the $P_{5k}$ may be the compacted density of the powder of the artificial graphite of the embodiment of the present application after pressure maintaining under the pressure of 5,000 kg for 30 s and pressure releasing for 10 s, in g/cm$^3$;

the $L_{\text{pressure maintaining}}$ is the thickness of the powder of the artificial graphite of the embodiment of the present application after pressure maintaining under the pressure of 5,000 kg for 30 s; and the $L_{\text{pressure releasing}}$ is the thickness of the powder of the artificial graphite after pressure maintaining under the pressure of 5,000 kg for 30 s and pressure releasing for 10 s. In an embodiment, the $L_{pressure\ maintaining}$ may be the thickness of the powder of the artificial graphite of the embodiment of the present application after pressure maintaining under the pressure of 5,000 kg for 30 s; and the $L_{pressure\ releasing}$ is the thickness of the powder of the artificial graphite after pressure maintaining under the pressure of 5,000 kg for 30 s and pressure releasing for 10 s.

Based on the formula of $\eta$, the $\eta$ is a change rate between the $L_{pressure\ maintaining}$ and the $L_{pressure\ releasing}$ of the artificial graphite of the embodiment of the present application, in %.

According to the definitions of the unit of the $P_{5k}$ and the $\eta$, the unit of the $\eta/P_{5k}$ is $cm^3/g$.

The inventors find through researches that the compacted density $P_{5k}$ and the powder compaction rebound rate of the artificial graphite prepared by the method for preparing an artificial graphite of the embodiment of the present application mentioned above, that is, the artificial graphite of the embodiment of the present application, satisfy the relationship in the above equation. The artificial graphite particle of an embodiment of the present application has a relatively low rebound capacity, such that the powder of the artificial graphite of the embodiment of the present application has a relatively low compaction rebound performance, and the artificial graphite particle of an embodiment of the present application has a high compacted density stability and compacted density, and a improved cycling performance. Therefore, when the artificial graphite is used as a negative electrode material, the energy density and the cycling performance of the negative electrode and the battery can be improved accordingly.

In some embodiments, the inventors further study and test to find that the compacted density $P_{5k}$ and the powder compaction rebound rate of the artificial graphite of the embodiment of the present application can be controlled and adjusted by adjusting the heat treatment conditions in the method for preparing an artificial graphite of the embodiment of the present application, such that $\eta/P_{5k}$ is 0.10 $cm^3/g$-0.13 $cm^3/g$, that is, 0.10 $cm^3/g \leq \eta/P_{5k} \leq 0.13\ cm^3/g$. When the $\eta/P_{5k}$ is within the range, the artificial graphite particle of the embodiment of the present application has a further reduced compaction rebound capacity, a higher compacted density stability and compacted density, and a improved cycling performance.

In some embodiments, through testing, the $P_{5k}$ of the artificial graphite of the embodiment of the present application is 1.83-2.08 $g/cm^3$, further may be 1.85-2.08 $g/cm^3$, and specifically may be the typical but non-limiting $P_{5k}$ compacted density of 1.83 $g/cm^3$, 1.85 $g/cm^3$, 1.90 $g/cm^3$, 1.95 $g/cm^3$, 2 $g/cm^3$, 2.05 $g/cm^3$, and 2.10 $g/cm^3$. The $P_{5k}$ value is the compacted density value of the powder of the artificial graphite of the embodiment of the present application after pressure maintaining under the pressure of 5,000 kg for 30 s and pressure releasing for 10 s.

In some embodiments, the $\eta$ of the artificial graphite of the embodiment of the present application is 15%-32%, further may be 15%-28%.

When the $P_{5k}$ compacted density and $\eta$ of the artificial graphite of the embodiment of the present application mentioned above are controlled to be within the range, the $\eta/P_{5k}$ value mentioned above can be adjusted and optimized, such as controlled to be 0.08 $cm^3/g$-0.15 $cm^3/g$, and further may be controlled to be 0.10 $cm^3/g$-0.13 $cm^3/g$. Therefore, the powder of the artificial graphite of the embodiment of the present application has a relatively lower rebound capacity, a higher compacted density, a more stable compacted density, and an improved cycling performance.

In some embodiments, the inventors further study and test to find that the artificial graphite of the embodiment of the present application further has at least one of the following characteristics based on the $P_{5k}$ compacted density and $\eta$ range mentioned above:

the particle size Dv50 of the artificial graphite is 6-15 $\mu m$.

The BET specific surface area of the artificial graphite may be 1.7- 2.5 $m^2/g$, further 1.7-2.2 $m^2/g$. In an embodiment, the specific surface area may be typical but non-limiting 1.7 $m^2/g$, 1.8 $m^2/g$, 1.9 $m^2/g$, 2.0 $m^2/g$, 2.1 $m^2/g$, 2.2 $m^2/g$, etc.

The OI value of the artificial graphite may be 5-15, further 5-10. In an embodiment, the value may be typical but non-limiting 5, 6, 7, 8, 9, 10, 11, 12, 13, 14, 15, etc.

The resistivity of the powder of the artificial graphite under the pressure of 8 Mpa is 0.008 $\Omega$.cm-0.055 $\Omega$.cm, further 0.01 $\Omega$.cm-0.042 $\Omega$.cm. In an embodiment, the resistivity may be typical but non-limiting 0.008 $\Omega$.cm, 0.01 $\Omega$.cm, 0.015 $\Omega$.cm, 0.02 $\Omega$.cm, 0.025 $\Omega$.cm, 0.03 $\Omega$.cm, 0.035 $\Omega$.cm, 0.04 $\Omega$.cm, 0.042 $\Omega$.cm, etc.

The tap density of the artificial graphite may be 0.80-1.19 $g/cm^3$, further 0.85-1.16 $g/cm^3$. In an embodiment, the tap density may be typical but non-limiting 0.80 $g/cm^3$, 0.85 $g/cm^3$, 0.90 $g/cm^3$, 0.95 $g/cm^3$, 1.00 $g/cm^3$, 1.05 $g/cm^3$, 1.10 $g/cm^3$, 1.15 $g/cm^3$, 1.19 $g/cm^3$, etc.

The capacity per gram of the artificial graphite may be 343-365 mAh/g, further 345-360 mAh/g. In an embodiment, the capacity per gram may be typical but non-limiting 343 mAh/g, 345 mAh/g, 348 mAh/g, 350 mAh/g, 353 mAh/g, 355 mAh/g, 358 mAh/g, 360 mAh/g, 362 mAh/g, 365 mAh/g, etc.

The degree of graphitization G of the artificial graphite may be controlled to be 91%-95%, further 91%-94%.

Therefore, on the basis that the artificial graphite of the embodiment of the present application has a low compaction rebound capacity, a high compacted density, and a good cycling performance, the P5k compacted density and rebound rate thereof satisfy the above relational expression. The artificial graphite also has particle morphology characteristics such as a high specific surface area, a favourable ion diffusion property and tap density, etc. The particle morphology characteristics can further improve the electric conductivity, the compacted density, and the low rebound capacity of the artificial graphite of the embodiment of the present application, and endow the artificial graphite of the embodiment of the present application with a high capacity per gram.

**Negative electrode material**

In a third aspect, an embodiment of the present application provides a negative electrode material. The negative electrode material of the embodiment of the present application comprises an artificial graphite.

In the negative electrode material of the embodiment of the present application, the artificial graphite contained therein is an artificial graphite of the embodiment of the present application mentioned above. Therefore, the negative electrode material of the embodiment of the present application has a high bonding strength among particles, a low compaction rebound capacity, a stable and high compacted density, and further a high cycling performance. Therefore, an electrode containing the negative electrode material of the embodiment of the present application has a high energy density and cycling performance.

Of course, in addition to the artificial graphite of the embodiment of the present application, the negative electrode material of the embodiment of the present application may further contain other negative electrode materials or additives capable of assisting the negative electrode materials to perform the functions thereof. Other negative electrode materials or additives which mainly can be compounded with the artificial graphite to play an activity role of the negative electrode material or assist in improving the activity role of the negative electrode material of the artificial graphite are all within the scope disclosed by the embodiment of the present application.

**Negative electrode**

In a fourth aspect, an embodiment of the present application provides a negative electrode. A negative electrode material contained in the negative electrode of the embodiment of the present application comprises the artificial graphite of the embodiment of the present application or the negative electrode material of the embodiment of the present application mentioned above.

Since the negative electrode material contained in the negative electrode of the embodiment of the present application comprises the artificial graphite of the embodiment of the present application mentioned above, a negative electrode active layer formed by the negative electrode material has a high compacted density, a low compaction rebound capacity, and a good conductivity, such that the negative electrode of the embodiment of the present application has a high energy density and rate characteristic, and a good cycling performance.

In an embodiment, the negative electrode of the embodiment of the present application may include a negative electrode current collector and a negative electrode active layer bonded to the negative electrode current collector.

The negative electrode current collector contained in the negative electrode of the embodiment of the present application may be a copper foil, of course, can also be other negative electrode current collectors. The properties of the negative electrode current collector, such as the thickness, may be adjusted according to the requirements of a particular application.

In an embodiment, the negative electrode active layer contained in the negative electrode of the embodiment of the present application may further include a conductive agent, a binder, a thickener, etc. in addition to the artificial graphite of the embodiment of the present application or the negative electrode material of the embodiment of the present application mentioned above.

In an embodiment, the binder may include at least one of a styrene butadiene latex binder (SBR), polyacrylic acid (PAA), sodium polyacrylate (PAAS), polyacrylamide (PAM), polyvinyl alcohol (PVA), styrene butadiene rubber (SBR), carboxymethyl cellulose (CMC), sodium alginate (SA), polymethacrylic acid (PMAA), and carboxymethyl chitosan (CMCS). The binder of these types can enhance the bonding strength among negative electrode material particles, improve the mechanical performance of the negative electrode active layer, and improve the energy density and the cycling performance of the negative electrode of the embodiment of the present application.

In an embodiment, the conductive agent may include at least one of Super P, graphite, superconducting carbon, acetylene black, carbon black, Ketjen black, carbon dots, carbon nanotubes, graphene, and carbon nanofibers. The conductive agent of these types can be uniformly dispersed, has a conductive synergistic effect with components contained in the negative electrode active layer, such as modified graphite, and improves the electron conductivity of the negative electrode active layer.

In an embodiment, the thickener may include at least one of sodium carboxymethyl cellulose (CMC-Na). These thickeners can effectively improve the dispersion uniformity of the material contained in the negative electrode active layer, thereby improving the mechanical uniformity of the negative electrode active layer and improving the energy density and the cycling performance of the negative electrode of the embodiment of the present application.

**Battery**

In a fifth aspect, an embodiment of the present application provides a battery. The battery comprises a negative electrode. The negative electrode is a negative electrode of the embodiment of the present application mentioned above, that is, the negative electrode contains the artificial graphite of the embodiment of the present application mentioned above.

In an embodiment, the battery of the embodiment of the present application can be a secondary battery. When the battery of the embodiment of the present application is a secondary battery, the battery comprises a positive electrode, a separator, and a negative electrode. That is, the negative electrode contained in the secondary battery is the negative electrode of the embodiment of the present application mentioned above, that is, the negative electrode contains the artificial graphite of the embodiment of the present application mentioned above.

Therefore, the battery of the embodiment of the present application, specifically such as a secondary battery, has a high energy density and has a high rate capability and a good cycling stability.

In an embodiment, the secondary battery of the embodiment of the present application may include any one of a battery cell, a battery module, and a battery pack.

The battery cell comprises a battery housing and a cell packaged in the battery housing. The shape of the battery cell is not particularly limited, and may be cylindrical, square, or any other shape. For example, Fig. 2 shows a square battery cell 10.

In some embodiments, as shown in Fig. 3, the outer package of the battery cell 10 may include a housing 11 and a cover plate 13. The housing 11 may include a bottom plate and side plates connected to the bottom plate, and the bottom plate and the side plates are enclosed to form an accommodating cavity. The housing 11 has an opening in communication with the accommodating cavity, and the cover plate 13 is used for covering the opening to close the accommodating cavity. The positive electrode, the separator, and the negative electrode contained in the secondary battery of the embodiment of the present application can form an electrode assembly 12 by a winding process and/ or a stacking process. The electrode assembly 12 is packaged in the accommodating cavity. An electrolyte solution is infiltrated into the electrode assembly 12. The number of the electrode assemblies 12 contained in the battery cell 10 may be one or more, and may be adjusted according to actual requirements.

A method for preparing the battery cell 10 is well-known. In some embodiments, the positive electrode, the separator, the negative electrode, and the electrolyte solution may be assembled to form the battery cell 10. As an embodiment, the positive electrode, the separator, and the negative electrode may be formed into an electrode assembly 12 by a winding process or a stacking process, the electrode assembly 12 is placed into an outer package and dried, an electrolyte solution is injected thereto, followed by the procedures such as vacuum packaging, standing, forming, and shaping to obtain the battery cell 10.

The battery module is formed by assembling the battery cells 10, that is, the battery module may include a plurality of the battery cells 10, and the specific number may be adjusted according to the use and the capacity of the battery module.

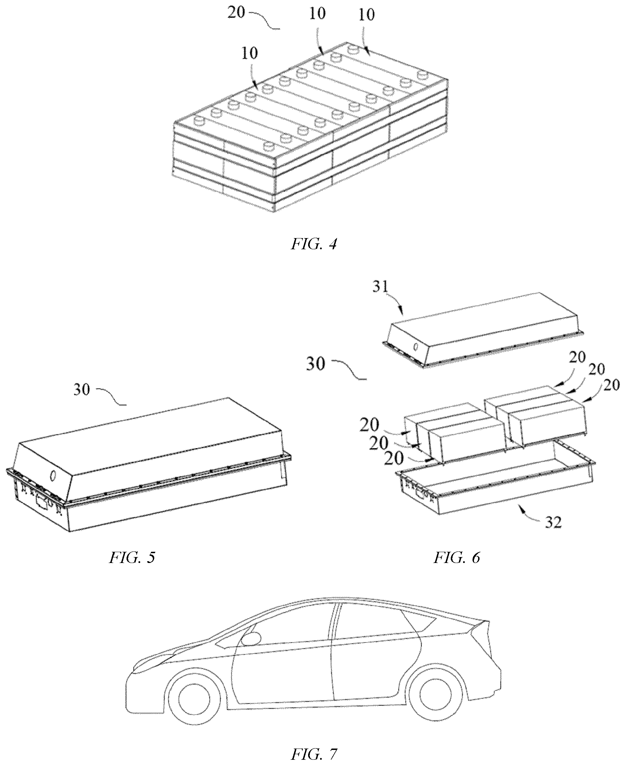

In some embodiments, Fig. 4 shows a schematic diagram of a battery module 20 as an example. As shown in Fig. 4, in the battery module 20, a plurality of battery cells 10 may be arranged in sequence in the length direction of the battery module 20. Apparently, the battery cells may also be arranged in any other manner. Further, the plurality of battery cells 10 may be fixed by fasteners.

Optionally, the battery module 20 may further comprise a housing having an accommodating space, and the plurality of battery cells 10 are accommodated in the accommodating space.

The battery pack is formed by assembling the battery cells 10 mentioned above, that is, the battery pack may include a plurality of battery cells 10, wherein the plurality of battery cells 10 may be assembled into the battery module 20 mentioned above. The specific number of the battery cells 10 or the battery modules 20 contained in the battery pack can be adjusted according to the use and capacity of the battery pack.

In an embodiment, Figs. 5 and 6 show a schematic diagram of a battery pack 30 as an example. The battery pack 30 may include a battery box and a plurality of battery modules 20 provided in the battery box. The battery box comprises an upper box body 31 and a lower box body 32, and the upper box body 31 is used to cover the lower box body 32 to form a closed space for accommodating the battery module 20. The plurality of battery modules 20 may be arranged in the battery box in any manner.

**Power consuming device**

In a sixth aspect, an embodiment of the present application further provides a power consuming device, including the secondary battery of the embodiment of the present application mentioned above. The secondary battery can be used as a power supply of the power consuming device, and can also be used as an energy storage unit of the power consuming device. Therefore, the power consuming device of the embodiment of the present application has a long standby or endurance time.

The power consuming device may be, but is not limited to, a mobile apparatus (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck, etc.), an electric train, a ship and a satellite, an energy storage system, etc. A secondary battery, a battery module or a battery pack may be selected for the power consuming device according to the use requirements thereof.

Fig. 7 shows a schematic diagram of a power consuming device as an example. The power consuming device may be a pure electric vehicle, a hybrid electric vehicle, a plug-in hybrid electric vehicle, etc. In order to meet the requirements of the power consuming device for a high power and a high energy density, a battery pack or battery module may be used.

As another example, the power consuming device may be a mobile phone, a tablet computer, a laptop computer, etc. The power consuming device is generally required to be thin and light, and may have a secondary battery used as a power supply.

## Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. The reagents or instruments used therein on which no manufacturers are specified are all commercially available conventional products. 1. Examples of artificial graphite and preparation method therefor

Example A1

The present example provided an artificial graphite and a preparation method therefor. A method for preparing an artificial graphite of the present example comprised the following steps:

S1. preparation of artificial graphite raw material:

S11: a petroleum coke raw material was coarsely crushed by a jaw crusher, and finely crushed by a mechanical mill and then graded to obtain a granular solid carbon source;
S12: the granular solid carbon source in step S11 was shaped to obtain a shaped particle with the Dv50 of 10 $\mu$m;
S13: a binder pitch (with the Dv50 of 5-8 $\mu$m) accounting for 10% of the mass of the shaped particle in step S12 was added to be mixed with the shaped particle at a stirring speed of 1,200 r/min, heated to 560°C and granulated to 15 $\mu$m to obtain a carbon source particle; and
S14: the carbon source particle obtained in step S13 was graphitized at 3,000°C and then screened to obtain an artificial graphite; and

S2. heat treatment:
the artificial graphite raw material prepared in step S1 was placed into a CVD furnace chamber, air was introduced into the furnace chamber through a device gas inlet system, the CVD furnace was heated to 700°C in a programmed mode, and the artificial graphite raw material was in a static state and subjected to a heat treatment for 30 minutes, subjected to a surface treatment process in the furnace chamber, and cooled to obtain an artificial graphite.

Example A2

The present example provided an artificial graphite and a preparation method therefor. A method for preparing an artificial graphite of the present example comprised the following steps:

S1. preparation of artificial graphite raw material: reference was made to step S1 of example A1.
S2. heat treatment:
the artificial graphite raw material prepared in step S1 was placed into a CVD furnace chamber, air was introduced into the furnace chamber through a device gas inlet system, the CVD furnace was heated to 400°C in a programmed mode, and the artificial graphite raw material was in a static state and subjected to a heat treatment for 60 minutes, subjected to a surface treatment process in the furnace chamber, and cooled to obtain an artificial graphite.

Example A3

The present example provided an artificial graphite and a preparation method therefor. A method for preparing an artificial graphite of the present example comprised the following steps:

S1. preparation of artificial graphite raw material: reference was made to step S1 of example A1.
S2. heat treatment:
the artificial graphite raw material prepared in step S1 was placed into a CVD furnace chamber, $CO_2$ was introduced into the furnace chamber through a device gas inlet system, the CVD furnace was heated to 700°C in a programmed mode, and the artificial graphite raw material was in a static state and subjected to a heat treatment for 60 minutes, subjected to a surface treatment process in the furnace chamber, and cooled to obtain an artificial graphite.

Example A4

The present example provided an artificial graphite and a preparation method therefor. A method for preparing an artificial graphite of the present example comprised the following steps:

S1. preparation of artificial graphite raw material: reference was made to step S1 of example A1.
S2. heat treatment:
the artificial graphite raw material prepared in step S1 was placed into a CVD furnace chamber, $CO_2$ was introduced into the furnace chamber through a device gas inlet system, the CVD furnace was heated to 400°C in a programmed mode, and the artificial graphite raw material was in a static state and subjected to a heat treatment for 180 minutes, subjected to a surface treatment process in the furnace chamber, and cooled to obtain an artificial graphite.

Example A5

The present example provided an artificial graphite and a preparation method therefor. A method for preparing an artificial graphite of the present example comprised the following steps:

S1. preparation of artificial graphite raw material: reference was made to step S1 of example A1.
S2. heat treatment:
the artificial graphite raw material prepared in step S1 was placed into a CVD furnace chamber, air was introduced into the furnace chamber through a device gas inlet system, the CVD furnace was heated to 400°C in a programmed mode, and the artificial graphite raw material was in a static state and subjected to a heat treatment for 90 minutes, subjected to a surface treatment process in the furnace chamber, and cooled to obtain an artificial graphite.

Example A6

The present example provided an artificial graphite and a preparation method therefor. A method for preparing an artificial graphite of the present example comprised the following steps:

S1. preparation of artificial graphite raw material: reference was made to step S1 of example A1.
S2. heat treatment:
the artificial graphite raw material prepared in step S1 was placed into a CVD furnace chamber, air was introduced into the furnace chamber through a device gas inlet system, the CVD furnace was heated to 600°C in a programmed mode, and the artificial graphite raw material was in a static state and subjected to a heat treatment for 45 minutes, subjected to a surface treatment process in the furnace chamber, and cooled to obtain an artificial graphite.

Example A7

The present example provided an artificial graphite and a preparation method therefor. A method for preparing an artificial graphite of the present example comprised the following steps:

S1. preparation of artificial graphite raw material: reference was made to step S1 of example A1.
S2. heat treatment:
the artificial graphite raw material prepared in step S1 was placed into a CVD furnace chamber, $CO_2$ was introduced into the furnace chamber through a device gas inlet system, the CVD furnace was heated to 700°C in a programmed mode, and the artificial graphite raw material was in a static state and subjected to a heat treatment for 180 minutes, subjected to a surface treatment process in the furnace chamber, and cooled to obtain an artificial graphite.

Example A8

The present example provided an artificial graphite and a preparation method therefor. A method for preparing an artificial graphite of the present example comprised the following steps:

S1. preparation of artificial graphite raw material: reference was made to step S1 of example A1.
S2. heat treatment:
the artificial graphite raw material prepared in step S1 was placed into a CVD furnace chamber, $CO_2$ was introduced into the furnace chamber through a device gas inlet system, the CVD furnace was heated to 500°C in a programmed mode, and the artificial graphite raw material was in a static state and subjected to a heat treatment for 120 minutes, subjected to a surface treatment process in the furnace chamber, and cooled to obtain an artificial graphite.

Comparative example A1

The present comparative example provided an artificial graphite and a preparation method therefor. The artificial graphite of the present comparative example was an artificial graphite prepared by step S1 in example A1.
A method for preparing an artificial graphite of the present comparative example comprised the following step:
an artificial graphite was prepared by step S1 in the method for preparing an artificial graphite in example A1.

Comparative example A2

The present comparative example provided an artificial graphite and a preparation method therefor. A method for preparing an artificial graphite of the present comparative example comprised the following steps:

S1. preparation of artificial graphite raw material: reference was made to step S1 of example A1.
S2. heat treatment:
the artificial graphite raw material prepared in step S1 was placed into a CVD furnace chamber, the atmosphere in the furnace was kept under a vacuum, the CVD furnace was heated to 300°C in a programmed mode, and the artificial graphite raw material was subjected to a heat treatment for 60 minutes, subjected to a surface treatment process in the furnace chamber, and cooled to obtain an artificial graphite.

Comparative example A3

The present comparative example provided an artificial graphite and a preparation method therefor. A method for preparing an artificial graphite of the present comparative example comprised the following steps:

S1. preparation of artificial graphite raw material: reference was made to step S1 of example A1.
S2. heat treatment:
the artificial graphite raw material prepared in step S1 was placed into a CVD furnace chamber, nitrogen was introduced into the furnace chamber through a device gas inlet system, the CVD furnace was heated to 700°C in a programmed mode, and the artificial graphite raw material was subjected to a heat treatment for 180 minutes, subjected to a surface treatment process in the furnace chamber, and cooled to obtain an artificial graphite.

Comparative example A4

The present comparative example provided an artificial graphite and a preparation method therefor. A method for preparing an artificial graphite of the present comparative example comprised the following steps:

S1. preparation of artificial graphite raw material: reference was made to step S1 of example A1.
S2. heat treatment:
the artificial graphite raw material prepared in step S1 was placed into a CVD furnace chamber, nitrogen was introduced into the furnace chamber through a device gas inlet system, the CVD furnace was heated to 700°C in a programmed mode, and the artificial graphite raw material was subjected to a heat treatment for 60 minutes, subjected to a surface treatment process in the furnace chamber, and cooled to obtain an artificial graphite.

Comparative example A5

The present comparative example provided an artificial graphite and a preparation method therefor. A method for preparing an artificial graphite of the present comparative example comprised the following steps:

S1. preparation of artificial graphite raw material: reference was made to step S1 of example A1.
S2. heat treatment:
the artificial graphite raw material prepared in step S1 was placed into a CVD furnace chamber, oxygen was introduced into the furnace chamber through a device gas inlet system, the CVD furnace was heated to 900°C in a programmed mode, and the artificial graphite raw material was subjected to a heat treatment for 30 minutes, subjected to a surface treatment process in the furnace chamber, and cooled to obtain an artificial graphite.

Comparative example A6

The present comparative example provided an artificial graphite and a preparation method therefor. A method for preparing an artificial graphite of the present comparative example comprised the following steps:

S1. preparation of artificial graphite raw material: reference was made to step S1 of example A1.
S2. heat treatment:
the artificial graphite raw material prepared in step S1 was placed into a CVD furnace chamber, nitrogen was introduced into the furnace chamber through a device gas inlet system, the CVD furnace was heated to 800°C in a programmed mode, and the artificial graphite raw material was subjected to a heat treatment for 45 minutes, subjected to a surface treatment process in the furnace chamber, and cooled to obtain an artificial graphite.

2. Examples of secondary battery cell

Examples B1 to B8 and comparative examples B1 to B6

The present examples B1 to B8 and the comparative examples B1 to B6 each provided a secondary battery cell. Each secondary battery cell comprised a cell formed by a positive electrode, a separator, and a negative electrode, and further comprised an electrolyte solution, wherein, the positive electrode was prepared according to the following method:
a positive electrode active material of $LiNi_{0.5}Co_{0.2}Mn_{0.3}O_2$ (NCM523), a conductive agent (Super P), and a binder of PVDF were fully stirred and mixed in an appropriate amount of NMP in a mass ratio of 96.2 : 2.7 : 1.1, to form a uniform positive electrode slurry; and the positive electrode slurry was coated onto a surface of a positive electrode current collector of aluminum foil, followed by drying and cold pressing, to obtain a positive electrode plate. The compacted density of the positive electrode was measured to be 3.45. g/cm$^3$.
The negative electrode was prepared according to the following method:
An artificial graphite, a conductive agent (Super P), a binder (SBR), and a thickener (CMC-Na) were fully stirred and mixed in an appropriate amount of deionized water in a mass ratio of 96.2 : 0.8 : 1.8 : 1.2, to form a uniform negative electrode slurry; and the negative electrode slurry was coated onto a surface of a negative electrode current collector of copper foil, followed by drying and cold pressing, to obtain a negative electrode plate, wherein the artificial graphite is an artificial graphite provided in the examples A1 to A8 and an artificial graphite provided in the comparative examples A1 to A6 mentioned above, the artificial graphite provided in example A1 was used for preparing the negative electrode contained in the secondary battery cell in example B1, the artificial graphite provided in example A2 was used for preparing the negative electrode contained in the secondary battery cell in example B2, etc., and the artificial graphite provided in comparative example A1 was used for preparing the negative electrode contained in the secondary battery cell in comparative example B1. Besides, the compacted density and the surface density of the negative electrode were respectively shown in Table 1.
Electrolyte solution: Ethylene carbonate (EC), ethyl methyl carbonate (EMC), and diethyl carbonate (DEC) were mixed at a volume ratio of 1 : 1 : 1, and then $LiPF_6$ was uniformly dissolved in the above solution to obtain an electrolyte solution, wherein the concentration of $LiPF_6$ was 1 mol/L.

Separator: Polyethylene (PE) film.

Assembly of secondary battery: a cell was formed by sequentially stacking the positive electrode/separator/negative electrode, the bare cell was placed into an outer package, the above electrolyte solution was injected thereto, and after packaging, a secondary battery cell was obtained.

**Testing of relevant data of artificial graphite and secondary battery cell**

The artificial graphite and the secondary battery cells provided in the examples and the comparative examples were respectively tested for the relevant items in Table 1. The test results were shown in Table 1 below.

The relevant properties in Table 1 were measured according to national standards or industrial standards.

Table 1

| Examples | | Artificial graphite | | | | | | | Battery cell | | |
|---|---|---|---|---|---|---|---|---|---|---|---|
| | | Compacted density $P_{5k}$ g/cm³ | $\eta = (L_{pressure\ releasing} - L_{pressure\ maintaining})/L_{pressure\ maintaining}$ | $\eta/P_{5k}$ | $D_v50$ μm | Degree of graphitization G (%) | BET specific surface area m²/g | capacity per gram mAh/g | Compacted density of negative electrode g/cm³ | Surface density of negative electrode mg/cm² | 45Deg 1C/1C, 25°C, 1,000 cycles, capacity retention rate |
| Examples | A1 | 1.85 | 0.19 | 0.1 | 6 | 91 | 1.7 | 360 | / | / | / |
| | A2 | 1.9 | 0.15 | 0.08 | 12 | 92.50 | 1.78 | 356 | / | / | / |
| | A3 | 1.93 | 0.17 | 0.09 | 15 | 91.80 | 1.9 | 345 | / | / | / |
| | A4 | 1.95 | 0.20 | 0.1 | 15 | 94 | 2.05 | 356 | / | / | / |
| | A5 | 1.97 | 0.20 | 0.1 | 15 | 94.70 | 2.3 | 350 | / | / | / |
| | A6 | 1.95 | 0.23 | 0.12 | 10 | 94.80 | 2 | 355 | / | / | / |
| | A7 | 2.05 | 0.27 | 0.13 | 15 | 95 | 2.3 | 358 | / | / | / |
| | A8 | 2.08 | 0.31 | 0.15 | 15 | 95 | 2.5 | 350 | / | / | / |
| Comparative examples | A1 | 1.55 | 0.11 | 0.07 | 6 | 91 | 1 | 345 | / | / | / |
| | A2 | 1.65 | 0.12 | 0.07 | 10 | 92.60 | 1.2 | 355 | / | / | / |
| | A3 | 1.7 | 0.10 | 0.06 | 14.5 | 93.70 | 1.4 | 340 | / | / | / |
| | A4 | 1.8 | 0.31 | 0.17 | 18 | 94 | 1.35 | 345 | / | / | / |
| | A5 | 1.85 | 0.37 | 0.2 | 20 | 92.6 | 5.3 | 350 | / | / | / |
| | A6 | 1.6 | 0.38 | 0.24 | 16 | 93.10 | 1.1 | 343 | / | / | / |

(continued)

| Examples | | Artificial graphite | | | | | | | Battery cell | | |
|---|---|---|---|---|---|---|---|---|---|---|---|
| | | Compacted density $P_{5k}$ g/cm$^3$ | $\eta = (L_{pressure\ releasing} - L_{pressure\ maintaining})/L_{pressure\ maintaining}$ | $\eta/P_{5k}$ | $D_v$ 50 $\mu$m | Degree of graphitization G (%) | BET specific surface area m$^2$/g | capacity per gram mAh/g | Compacted density of negative electrode g/cm$^3$ | Surface density of negative electrode mg/cm$^2$ | 45Deg 1C/1C, 25°C, 1,000 cycles, capacity retention rate |
| Examples | B1 | \ | \ | \ | \ | \ | \ | \ | 1.68 | 11 | 92 |
| | B2 | \ | \ | \ | \ | \ | \ | \ | 1.70 | 11 | 91.5 |
| | B3 | \ | \ | \ | \ | \ | \ | \ | 1.70 | 11 | 90.8 |
| | B4 | \ | \ | \ | \ | \ | \ | \ | 1.72 | 11 | 92.3 |
| | B5 | \ | \ | \ | \ | \ | \ | \ | 1.75 | 11 | 90.1 |
| | B6 | \ | \ | \ | \ | \ | \ | \ | 1.72 | 11 | 89.9 |
| | B7 | \ | \ | \ | \ | \ | \ | \ | 1.78 | 11 | 91.1 |
| | B8 | \ | \ | \ | \ | \ | \ | \ | 1.80 | 11 | 90.9 |
| Comparative examples | B1 | \ | \ | \ | \ | \ | \ | \ | 1.43 | 11 | 91.1 |
| | B2 | \ | \ | \ | \ | \ | \ | \ | 1.45 | 11 | 92.1 |
| | B3 | \ | \ | \ | \ | \ | \ | \ | 1.48 | 11 | 90.8 |
| | B4 | \ | \ | \ | \ | \ | \ | \ | 1.55 | 11 | 80.9 |
| | B5 | \ | \ | \ | \ | \ | \ | \ | 1.5 | 11 | 83.5 |
| | B6 | \ | \ | \ | \ | \ | \ | \ | 1.40 | 11 | 82.1 |

EP 4 404 293 A1

It can be seen from Table 1 that after the graphite raw material was subjected to the specific heat treatment of the present application according to the method for preparing an artificial graphite of the embodiment of the present application, the graphite raw material can be effectively modified, at least comprising the surface performance, and the physical and electrochemical properties of the artificial graphite can be effectively changed. For example, the 5,000 kg powder compacted density $P_{5k}$ and the rebound rate $\eta$ of the artificial graphite material can satisfy the relationship of $0.08 \leq \eta/P_{5k} \leq 0.15$, and the compacted density of the corresponding negative electrode plate was effectively improved, such that the energy density of the battery cell can be effectively improved. Meanwhile, when the $\eta/P_{5k}$ was within the range of 0.08-0.15, the surface treatment degree of the artificial graphite material was proper, and the powder compacted density was improved and an oxygen-containing functional group was not over-introduced to deteriorate the cycling performance thereof.

Although the compaction rebound rate of the graphite raw material not treated by the preparation method of the embodiment of the present application, as in comparative example B1, was obviously lower than that of the artificial graphite prepared by the preparation method of the embodiment of the present application, the $\eta/P_{5k}$ thereof was not in the range of 0.08-0.15, such that the compacted density of the electrode plate was also obviously lower.

When the graphite raw material was subjected to the heat treatment for modification by using other heat treatment conditions as in comparative examples B2-B3, the compaction rebound rate of the obtained artificial graphite was obviously lower than that of the artificial graphite prepared by the preparation method of the embodiment of the present application. Besides, the $\eta/P_{5k}$ was also not in the range of 0.08-0.15, such as the $\eta/P_{5k}$ was < 0.07, such that the compacted density of the negative electrode plate was difficult to be effectively improved and the effect of improving the energy density cannot be achieved.

When the graphite raw material was subjected to the heat treatment for modification by using other heat treatment conditions as in comparative examples B4-B6, the compaction rebound rate of the obtained artificial graphite was obviously higher than that of the artificial graphite prepared by the preparation method of the embodiment of the present application. Besides, the $\eta/PSk$ was also not in the range of 0.08-0.15, such as the $\eta/P5k$ was > 0.17. The surface treatment can effectively improve the compacted density of the material powder compared with the comparative examples B1-B3, so as to improve the compacted density of the electrode plate and further improve the energy density. But the excessive surface treatment can cause a serious etching effect on the surface of the graphite material, such that the lithium consumption in the cycle process was increased and the cycling performance was deteriorated.

Therefore, after the graphite raw material was subjected to the specific heat treatment of the present application according to the method for preparing an artificial graphite of the embodiment of the present application, the modified artificial graphite had a relatively low compaction rebound capacity and a high compacted density. Further, the $\eta/P_{5k}$ of the modified artificial graphite can be further effectively controlled in a proper range, such as 0.08 cm$^3$/g-0.15 cm$^3$/g, further 0.10 cm$^3$/g-0.13 cm$^3$/g, such that the compaction rebound capacity of the artificial graphite of the embodiment of the present application was further improved, the compacted density was improved and stable; meanwhile, the cycling performance can be further improved, and the balance between the rebound capacity and the cycling performance of the artificial graphite can be realized. Therefore, when the artificial graphite was used as a negative electrode material, the energy density of the negative electrode and the battery can be correspondingly improved, and the conductivity was high; the compacted density of the negative electrode active layer contained in the negative electrode prepared thereby was high, the energy density was high, the structure of the negative electrode active layer was stable, the cycling performance was good, and thus the secondary battery cell containing the negative electrode was endowed with a high energy density, a high rate capability, and a good cycling stability.

Finally, it should be noted that the above examples are merely used for illustrating rather than limiting the technical solutions of the present application. Although the present application has been illustrated in detail with reference to the foregoing examples, it should be understood by those of ordinary skill in the art that the technical solutions described in the foregoing examples may still be modified, or some or all of the technical features thereof may be equivalently substituted; and such modifications or substitutions do not make the essence of the corresponding technical solution depart from the scope of the technical solutions of the examples of the present application, and should fall within the scope of the claims and the description of the present application. In particular, the technical features mentioned in the examples can be combined in any manner, provided that there is no structural conflict. The present application is not limited to the specific examples disclosed herein but includes all the technical solutions that fall within the scope of the claims.

## Claims

1. A method for preparing an artificial graphite, **characterized by** comprising the following step:

subjecting a graphite raw material to a heat treatment to obtain the artificial graphite,

wherein an environmental atmosphere for the heat treatment is at least one gas of air and carbon dioxide or a mixed gas of at least one gas of air and carbon dioxide and a chemically inert gas; and during the heat treatment, the graphite raw material is in a static state.

2. The preparation method according to claim 1, **characterized in that** the temperature for the heat treatment is 500-900°C; or
the temperature for the heat treatment is 500-900°C and the time for the heat treatment is 30-180 min.

3. The preparation method according to claim 1 or 2, **characterized in that** in the mixed gas, the at least one gas of air and carbon dioxide accounts for 5%-40% of the total volume of the mixed gas; and/or

the particle size Dv50 of the graphite raw material is 6-15 $\mu$m; and/or
the graphite raw material is an artificial graphite raw material.

4. The preparation method according to claim 3, **characterized in that** a method for preparing the artificial graphite raw material comprises the following steps:

crushing a solid carbon source to obtain a granular solid carbon source;
shaping the granular solid carbon source to obtain a shaped particle; and
graphitizing the shaped particle to obtain the artificial graphite raw material.

5. The preparation method according to claim 4, **characterized in that** the particle size Dv50 of the granular solid carbon source is 5-15 $\mu$m; and/or

the solid carbon source comprises at least one of a petroleum coke, a needle coke, a pitch coke, and a metallurgical coke; and/or
the graphitization is carried out at a temperature of 2,800-3,200°C; and/or
the method further comprises a step of granulating the shaped particle before the graphitizing the shaped particle.

6. The preparation method according to claim 5, **characterized in that** the granulating method comprises the following step:
mixing a carbon source binder and the shaped particle, followed by granulating and shaping.

7. An artificial graphite, **characterized in that** the artificial graphite is an artificial graphite prepared by a preparation method according to any one of claims 1-6.

8. The artificial graphite according to claim 7, **characterized in that** the compacted density and the rebound rate of the artificial graphite satisfy the following relationship:

$$0.08 \text{ cm}^3/\text{g} \leq \eta/P_{5k} \leq 0.15 \text{ cm}^3/\text{g, and } \eta = (L_{\text{pressure releasing}} - L_{\text{pressure maintaining}})/L_{\text{pressure maintaining}},$$

wherein the $P_{5k}$ is the compacted density of a powder of the artificial graphite under a pressure of 5,000 kg, in g/cm$^3$; the $L_{\text{pressure maintaining}}$ is the thickness of the powder of the artificial graphite when being maintained at the pressure of 5,000 kg; and the $L_{\text{pressure releasing}}$ is the thickness of the powder of the artificial graphite when the pressure is released after the pressure of 5,000 kg is applied.

9. The artificial graphite according to claim 7 or 8, **characterized in that** the $\eta/P_{5k}$ is 0.10 cm$^3$/g $\leq \eta/P_{5k} <$ 0.13 cm$^3$/g.

10. The artificial graphite according to any one of claims 7-9, **characterized in that** the $P_{5k}$ is 1.83-2.08 g/cm$^3$; and/or the $\eta$ is 15.0%-32%.

11. The artificial graphite according to any one of claims 7-10, **characterized in that** the $P_{5k}$ is 1.85-2.05 g/cm$^3$.

12. The artificial graphite according to any one of claims 7-11, **characterized in that** the artificial graphite further has at least one of the following properties:

the particle size Dv50 of the artificial graphite is 6-15 $\mu$m; and/or

the BET specific surface area of the artificial graphite is 1.7- 2.5 m$^2$/g; and/or
the OI value of the artificial graphite is 5-15; and/or
the resistivity of the powder of the artificial graphite under a pressure of 8 Mpa is 0.008 Ω.cm-0.055 Ω.cm; and/or
the tap density of the artificial graphite is 0.80-1.19 g/cm$^3$; and/or
the degree of graphitization G of the artificial graphite is 91%-95%; and/or
the capacity per gram of the artificial graphite is 343-365 mAh/g.

13. The artificial graphite according to any one of claims 7-12, **characterized in that** the artificial graphite further has at least one of the following properties:

the specific surface area of the artificial graphite is 1.7- 2.2 m$^2$/g; and/or
the OI value of the artificial graphite is 5-10; and/or
the resistivity of the powder of the artificial graphite under the pressure of 8 Mpa is 0.01 Ω.cm-0.042 Ω.cm; and/or
the tap density of the artificial graphite is 0.85-1.16 g/cm$^3$; and/or
the capacity per gram of the artificial graphite is 345-360 mAh/g.

14. A negative electrode material, **characterized by** comprising an artificial graphite, wherein the artificial graphite is an artificial graphite according to any one of claims 7-13.

15. A negative electrode, **characterized in that** a negative electrode material contained in the negative electrode comprises an artificial graphite according to any one of claims 7-13 or a negative electrode material according to claim 14.

16. A battery, **characterized by** comprising a negative electrode according to claim 15.

17. A power consuming device, **characterized in that** the power consuming device comprises a battery according to claim 16, and the battery is configured to supply electric energy.

Crushing a solid carbon source to obtain a granular
solid carbon source

S01

Shaping the granular solid carbon source to obtain a
shaped particle

S02

Graphitizing the shaped particle to obtain an
artificial graphite raw material

S03

*FIG. 1*

*FIG. 2*                    *FIG. 3*

FIG. 4

FIG. 5

FIG. 6

FIG. 7

<div align="center">**INTERNATIONAL SEARCH REPORT**</div>

| | International application No. |
|---|---|
| | **PCT/CN2022/134149** |

**A. CLASSIFICATION OF SUBJECT MATTER**

H01M 4/133(2010.01)i; H01M 4/587(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, CNKI, ENTXT, ENTXTC, DWPI: 电池, 石墨, 热处理, 空气, 二氧化碳, 烧, 密度, battery, anode, graphite, heat+, sinter, air, CO2, density, compacted

**C. DOCUMENTS CONSIDERED TO BE RELEVANT**

| Category* | Citation of document, with indication, where appropriate, of the relevant passages | Relevant to claim No. |
|---|---|---|
| X | CN 102214821 A (SHANGHAI SHANSHAN TECHNOLOGY CO., LTD.) 12 October 2011 (2011-10-12) description, paragraphs 4-51 | 1-17 |
| X | CN 115215335 A (ZHEJIANG TANYI NEW ENERGY CO., LTD.) 21 October 2022 (2022-10-21) description, paragraphs 8-46 | 1, 3, 7, 14-17 |
| X | CN 112366299 A (ZHEJIANG UNIVERSITY) 12 February 2021 (2021-02-12) description, paragraphs 4-65 | 1-3, 7, 14-17 |
| X | CN 104638234 A (SHENZHEN BTR NEW ENERGY MATERIALS CO., LTD.) 20 May 2015 (2015-05-20) description, paragraphs 11-82 | 1-3, 7, 14-17 |
| X | JP 2003077471 A (KASHIMA SEKIYU KK. et al.) 14 March 2003 (2003-03-14) description, paragraphs 7-33 | 1-3, 7, 14-17 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 June 2023** | **04 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/134149**

| Patent document cited in search report | | | Publication date (day/month/year) | Patent family member(s) | Publication date (day/month/year) |
|---|---|---|---|---|---|
| CN | 102214821 | A | 12 October 2011 | None | |
| CN | 115215335 | A | 21 October 2022 | None | |
| CN | 112366299 | A | 12 February 2021 | None | |
| CN | 104638234 | A | 20 May 2015 | None | |
| JP | 2003077471 | A | 14 March 2003 | None | |

Form PCT/ISA/210 (patent family annex) (July 2022)